# EUROPEAN PATENT APPLICATION

(11) **EP 2 835 773 A1**
(43) Date of publication of application: **11.02.2015**
(21) Application number: 14175903.5
(22) Date of filing: 07.07.2014
(51) Int. Cl.: G06Q 10/08

(54) **Delivery forecasting system**

(30) Priority: 07.08.2013 US 201313961307
(71) Applicant: ZF Friedrichshafen AG, 88038 Friedrichshafen (DE)
(72) Inventor: Muetzel, Ronald, Hawthorn Woods, IL Illinois 60047 (US); Roesch, Thomas, 88048 Friedrichshafen (DE)

(57) **Abstract**

Described are a system and methods for forecasting a delivery time and updating the forecasted delivery time of an object when a delay occurs. The delay of delivery may be determined based on information of a delivery vehicle provided by an on-board device or delivery status of the object stored in a delivery server. A historic delivery time to a place corresponding to the destination of the object or data collected from an outside service provider may be used for detecting delay condition of the delivery. A delivery service provider, a sender or a recipient may be notified of the delay or an updated delivery time.

## Description

### BACKGROUND OF THE INVENTION

Delivery service providers may provide to recipients the delivery status or estimated delivery date for deliveries. To provide the delivery status or estimated delivery time, a delivery management system receives input from the deposit location or intermediate points along delivery path. However, there is a substantial lag time in updating the status or the predicted delivery time because these inputs are typically provided only upon departure or arrival at each location where a delivery is temporarily placed on its delivery route. Unexpected traffic, accidents, weather, or a defective delivery vehicle may cause significant delivery delays. However, information about these delays is not input into the delivery management system unless a vehicle operator manually accesses it and enters the information. Further, a vehicle operator may be unaware of adverse conditions that may delay delivery. Thus, there is a need to promptly provide this information to the system so that the delivery status and estimate delivery time may be updated.

### SUMMARY OF THE INVENTION

The descriptions below include systems and methods for detecting delay of delivery and updating a delivery route and an estimated delivery time of an object. The delay of delivery may be determined based on vehicle information of the vehicle that delivers the object. Historic delivery times may inform the delivery time estimation. A delivery service provider, a sender, or a recipient may be notified of the delay or the updated estimated delivery time.

In one aspect, a method comprises receiving delivery information of the object; determining a delivery route for the object based on the delivery information; receiving vehicle information about a vehicle carrying the object; receiving route information of the delivery route; adjusting the delivery route for the object based on the vehicle information and route information; and estimating a delivery time of the object.

In another aspect, a method comprises receiving delivery information of an object; receiving vehicle information; receiving route information based on the delivery information; determining a delivery plan for the object based on the delivery information, vehicle information, and route information; and estimating a delivery time of the object.

In another aspect, a system comprises a processor configured to receive delivery information of the object; receive vehicle information; receive route information based on the delivery information; determine a delivery plan for the object based on the delivery information, vehicle information, and route information; and estimate a delivery time of the object; and a transceiver in communication with the processor.

Other systems, methods, features and advantages will be, or will become, apparent to one with skill in the art upon examination of the following figures and detailed description. It is intended that all such additional systems, methods, features and advantages be included within this description, be within the scope of the disclosure, and be protected by the following claims.

### BRIEF DESCRIPTION OF THE DRAWINGS

The examples described below may be more fully understood by reading the following description in conjunction with the drawings, in which
Figure 1 is a block diagram of a delivery forecasting system;
Figure 2 is a block diagram of an on-board device used in a delivery forecasting system; and
Figure 3 is a flow diagram of a method for forecasting delivery time of an object.

### DETAILED DESCRIPTION

The following exemplary systems and methods may be used to recognize a change in conditions to update a delivery plan, a forecasted delivery time, or a delivery status. These systems may monitor the progress of a delivery and compare the progress with the initial forecasted delivery time. When an object for delivery is retrieved from a sender, or dropped off by a sender at a repository, a system logs the delivery transaction based on manual input or automatically, for example, by means of a scanner. The delivery transaction information is sent to a delivery server. In cases where a delivery vehicle retrieves the object from the sender, the delivery transaction information is sent to the delivery server via an on-board device installed in the delivery vehicle. The delivery server determines an initial estimated delivery time for the object. If the sender has selected urgent delivery and/or a direct carrier type of delivery, the server may calculate a more precise delivery date and time. A delivery time may include both a date and a time of day.

The delivery server may monitor and update an object's delivery progress and status using information about the delivery vehicle. An on-board device installed in the delivery vehicle may provide the server with vehicle information that the on-board device collects. The delivery server may update the object's delivery status based on whether the object-carried aboard the vehicle-arrives or departs a specific location. The vehicle information may be used in addition to, or alternatively to, information collected at the specific location. For example, personnel may scan an object, e.g., a parcel, when it arrives at and departs from a distribution center. The delivery server may store information associated with the scanned parcel, for example, the date, time, and condition of its arrival and departure. The delivery server may also store vehicle information about the delivery vehicle that arrived and departed with the parcel. The vehicle information may be used to confirm or supplement the scan information, and may be used to update the parcel's estimated delivery date and time and other status information. The vehicle information advantageously provides additional information to improve the accuracy and reliability of delivery status.

A vehicle's on-board device may collect information about an object in the vehicle using a sensor, scanner, or other reading unit. The on-board device may transmit the information to the delivery server or some other server. This information, along with other information, may be used to calculate the object's estimated delivery time. The information read from the object may include, for example, the object's destination and tracking number. This machine-readable information may be, for example, located on a label attached on the object and stored in electronic format on an RFID tag or similar. Vehicle information including location, speed, or other operating and diagnostic vehicle data may be received and transmitted to a server via the on-board device. The server may use the vehicle information to determine whether to update an initial forecasted delivery time or adjust a delivery route.

The system may use data corresponding to a delivery route to determine the delivery forecast of an object. A server may calculate a delivery route among distribution centers and other points, and along roadways, airways, and waterways, based on the delivery information of the object. The delivery information includes object information, vehicle information, and route information. The server may change the object's initial forecasted delivery time or the object's initial delivery route depending on predicted or actual delay conditions indicated by vehicle or route information. The server may use route information, vehicle information, and object information to adjust a delivery route or estimated delivery time.

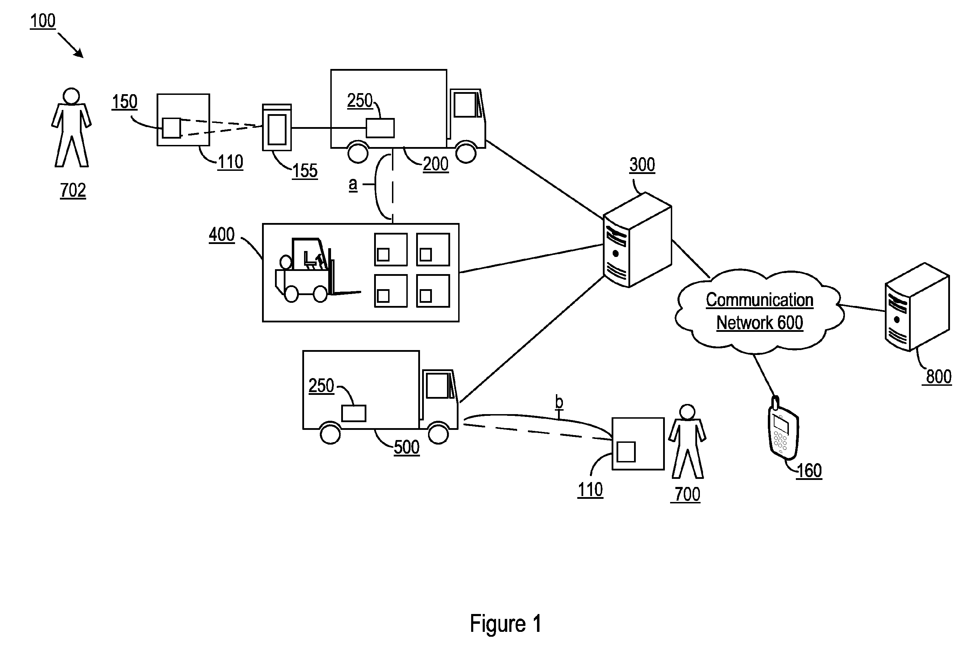

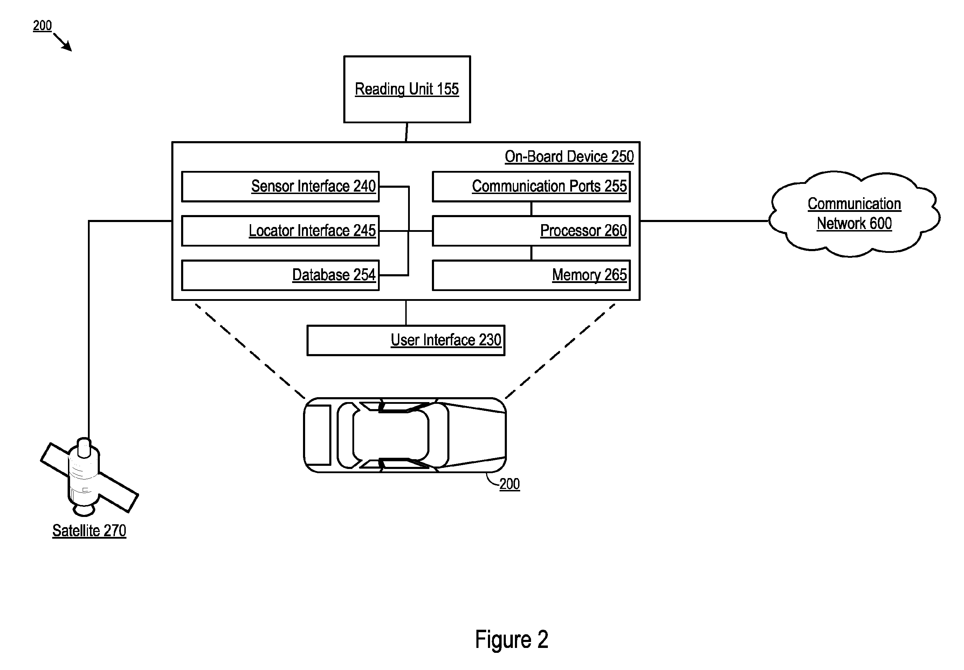

Figure 1 illustrates a block diagram of delivery system 100. Sender 702 intends to send object 110 to destination 700. Delivery system 100 may track the object 110 as it progresses towards destination 700. Delivery system 100 may provide an estimated delivery time for object 110 and may update the delivery route depending on, for example, conditions of the route and carrier vehicle. Sender 702 deposits object 110 with a carrier that arrives in vehicle 200. Vehicle 200 may take any number of forms, including, as examples, a truck, van, mini-van, airplane, helicopter, boat, motorcycle, hybrid vehicle, or other vehicle. Vehicle 200 is equipped with on-board device 250 to collect and provide the information about vehicle 200. On-board device 250 is described in further detail with respect to Figure 2.

Sender 702 may affix label 150 to object 110. At pickup, reading unit 155 scans label 150. Reading unit 155 may be a portable scanner or any device capable of reading or scanning bar codes, electronic product codes, text, RFID tags, or other electronic tags. Label 150 may include, for example, a bar code, RFID tag, or other device that stores information in print or electronically. Reading unit 155 may determine information from label 150, including, for example, destination 700 and a tracking number for object 110. Reading unit 155 may transfer the information to on-board device 250. Transfer may occur wirelessly or via a wired connection. Alternatively or additionally, reading unit 155 may transmit information to server 300 via wireless network 600.

Server 300 may determine a delivery plan for object 110. The delivery plan may include a delivery route parsed into individual segments. For example, a delivery route may include individual segments based on the speed at which object 110 may be carried along a segment: segments that provide high-speed travel, e.g. air route, may be used instead of segments over ground. Exemplary segments include segments "a" and "b" in Figure 1. The delivery route may identify particular vehicles to carry the object along particular segments. For example, vehicle 200 may carry object 110 along segment "a" and vehicle 500 may carry object 110 along segment "b." The delivery route may identify particular distribution centers, such as distribution center 400, that form the nodes of the delivery route. Distribution center 400 may handle, sort, scan, and store (possible on a temporary or long-term basis) object 110. In Figure 1, a delivery route includes vehicles 200, 500, segments "a" and "b," distribution center 400, pick-up location 702, and destination 700.

The delivery plan may also include an estimated delivery time of object 110 based on the information of object 110 and the delivery route. Server 300 may determine that object 110's delivery is urgent and select a direct carrier type of delivery. The delivery plan may then include a delivery route that uses urgent carriers such as airplanes. Server 300 may calculate a route along particular roads, airways, or waterways, and among distribution points for object 110's delivery. For example, server 300 may determine that vehicle 200 should deliver object 110 directly to destination 700 along a particular route. Server 300 may alternatively determine that vehicle 200 should deliver object 110 to distribution center 400 so that object 110 may be transferred to vehicle 500. Server 300 may make these determinations based on, for example, the urgency of object 110's delivery, the distance between sender 702 and destination 700, routes available for delivery, the conditions of vehicles 200 and 500, and information about traffic conditions along the route from sender 702 to destination 700. Server 300 may update a delivery plan according to this information.

System 100 also comprises user device 160 capable of communicating with server 300. An example of the user device may be, but not limited, a cellular phone, a computer, or a smart phone. Communication network 600 may enable user device 160 to access a website linked to server 300, or to receive delivery information from server 300 directly or indirectly.

Server 300 receives operating parameters and other information from vehicles 200, 500 that may include, for example, location, speed, acceleration, and other parameters described further below with respect to Figure 2. Server 300 uses this information and the delivery status of object 110 to update an initial forecasted delivery time. For example, server 300 may increase the initial delivery forecast of Monday to Tuesday because it receives information that vehicle 200 is traveling more slowly than estimated and that vehicle 200 is carrying object 110. Vehicle 200's location, speed, or acceleration may be obtained from parameters collecting by on-board device 250 using GPS, the vehicle's odometer, or other devices and sensors. Alternatively, or additionally, server 300 may consider diagnostic data of vehicles 200, 500. For example, on-board device 250 may detect a fault in vehicle 200. Server 300 may consider the diagnostic data that may indicate a fault condition in the vehicle. This fault condition may indicate delay of object 110's delivery.

On-board device 250 may receive the delivery information from reading unit 155, which may read label 150 containing machine-readable information. On-board device 250 may send the delivery information and vehicle information of vehicle 200 to server 300. Server 300 may use the delivery information to calculate an initial forecasted delivery time of object 110 to destination 700. Server 300 may use the vehicle information to adjust the initial forecasted delivery time. A vehicle occupant of vehicles 200, 500 may use on-board device 250 or some other device to send additional information about, for example, traffic conditions to server 300. Alternatively, server 300 may receive information from other sources about the conditions local to vehicles 200, 500 based on receiving the locations of vehicles 200, 500. Server 300 may consider all of this information to decide whether, and by how much, to adjust the initial forecasted delivery time. Server 300 may also use this information to determine a delivery route for object 110.

Server 300 may receive a message indicating that object 110 has arrived at distribution center 400. Server 300 may update the delivery status data corresponding to object 110. For example, object 110 may be scanned at distribution center 400, and the delivery status may be updated accordingly. When object 110 is placed on vehicle 500 and departs distribution center 400, object 110 may be scanned. Server 300 may receive a message indicating that object 110 has departed distribution center 400. The departure may be reflected in the delivery status of object 110. User device 160 may enable a user to access server 300 via communication network 600 to receive delivery route information, an estimated delivery time, or the current delivery status of object 110.

Server 300 may calculate a delivery route by defining points along a route. The route may include roadways, waterways, or airways that delivery vehicles 200, 500 may travel along. The route may include one or more distribution centers such as distribution center 400. The route may specify the type, make, or model of vehicle used to carry object 110, or may uniquely identify the vehicle, for example, by VIN (vehicle identification number). Server 300 may select the route based on the delivery information. For example, the combination of segment "a," distribution center 400, and segment "b" shows a complete route calculated by server 300. Further, server 300 may specify that vehicle 200 carry object 110 along segment "a." Depending on the destination, the route may include one or more distribution centers and segments. On-board device 250 may receive routes from server 300. Alternatively, on-board device 250 may calculate the routes based on the delivery information and provide server 300 with the routes. On-board device 250 may provide the operator of vehicles 200, 500 with route information, including directions, instructions, and other information.

Server 300 may modify the forecasted delivery time and the route based on a change in conditions or status. Sever 300 may use delivery information (e.g., arrival/departure/mail class information), vehicle information, or route information to update a forecasted delivery time and delivery status. Server 300 may also consider historic delivery time recorded for prior deliveries along the same or a different route. Server 300 may receive data corresponding to segments, distribution centers, and any aspect of a route from outside service provider 800 over communication network 600. Outside service provider 800 may provide traffic status, road construction/closures, accidents, weather forecasts, etc. Additionally or alternatively, on-board device 250 may receive information corresponding to the routes via communication network 600 and provide server 300 with the information.

Figure 2 depicts on-board device 250 that may be used in a delivery forecasting system. On-board device 250 may be integrated in vehicle 200. Vehicle 200 may take any number of forms, including, as examples, a truck, van, mini-van, airplane, helicopter, boat, motorcycle, hybrid vehicle, or other vehicle.

Vehicle 200 may include user interface 230, which may be communicatively linked to on-board device 250. Vehicle 200 may also include one or more occupants, e.g., a driver, one or more passengers, or any combination thereof. On-board device 250 may include communication ports 255, a processor 260, database 254, memory 265 that may store instructions or data, sensor interface 240, and locator interface 245.

On-board device 250 may communicate with any number of communication networks, including communication network 600, which may take any number of forms such as a cellular network. On-board device 250 may communicate according to any number of communication protocols, standards, networks, or topologies. As examples, on-board device 250 may communicate across cellular networks or standards (e.g., 2G, 3G, Universal Mobile Telecommunications System (UMTS), GSM (R) Association, Long Term Evolution (LTE) (TM), or more), WiMAX, Bluetooth, WiFi (including 802.11 a/b/g/n/ac or others), WiGig, Global Positioning System (GPS) networks, and others available at the time of the filing of this application or that may be developed in the future. On-board device 250 may include processing circuitry, data ports, transmitters, receivers, transceivers, or any combination thereof to communicate across any of the above-listed protocols, standards, networks, or topologies.

On-board device 250 may also communicate with any number of communication devices operated by occupants in vehicle 200. In one embodiment, on-board device 250 may implement a local area network (LAN) accessible by occupant communication devices, which may take the form of a wireless LAN (WLAN) or a wireless access point. Communication devices, such as hand-held smart phones, mobile phones, tablets, laptops, or other devices, may communicate directly with on-board device 250 through the WLAN. Alternatively, on-board device 250 may communicate with occupant communication devices indirectly, e.g., through one or more external communication networks, such as communication network 600, which may be a cellular network. Thus, reading unit 155 may communicate with on-board device 250 via various types of networks.

On-board device 250 may be configured according to any number of user requirements with respect to communication capabilities, data transfer configurations, data collection configurations, and other configurations. On-board device 250 may also collect any vehicle data, such as performance statistics, route information, position data, traffic data, and others. In one example, on-board device 250 may include telemetry functionality to collect and/or send vehicle data to a server. These telemetry functions may include measurements or records of speed, direction, acceleration, pitch, yawl, and roll, and measurements or records of rate of change for speed, direction, acceleration, pitch, yawl, and roll. One example of on-board device 250 is the Openmatics@ on-board unit provided by ZF Friedrichshafen AG.

On-board device 250 includes sensor interface 240 that may interface with one or more sensors in the vehicle. These sensors may include pressure sensors, a speed sensor, gyroscopes, temperature sensors, voltage and current monitors, magnetic sensors, microelectromechanical sensors, mechatronic sensors, position sensors, and compass sensors. These sensors are merely exemplary and the embodiments are not limited to those sensors listed herein. Via sensor interface 240, on-board device 250 may collect various operating parameters that may be stored in database 254, memory 265. These parameters may be used to determine a vehicle defect.

On-board device 250 also includes locator interface 245. Locator interface 245 may be a GPS receiver that is able to receive transmissions from GPS satellites providing the vehicle with a means to determine its location on the earth. The GPS coordinates may be used together with map software to provide the vehicle and its occupants with an indication of where the vehicle is located along a roadway, waterway, or anywhere on a map provided by the map software. Locator interface 245 may receive GPS transmissions from satellite 270. The vehicle's current location may be transferred to server 300 via communication ports 255.

On-board device 250 may be used to recognize a vehicle defect based on a comparison of the vehicle's operation at a given location with previous records of the vehicle's operation at the same location. A comparison to similar vehicles may also be used to detect a defect. As a vehicle travels along a route, measurements of the vehicle's operating parameters are recorded along with the vehicle location that corresponds with each recorded measurement. In this way, a log of the vehicle's performance at a known location is created. Entries in the log may be compared with a log or a series of logs for the same vehicle for previous trips along the same route. Alternatively, or additionally, the log may be compared with a log or a series of logs for other vehicles that have previously travelled the route.

A comparison of current measurements with previous measurements recorded at a given location may show that the vehicle has suffered a malfunction, defect, or other issue that is diminishing vehicle efficiency. For example, if the speed of an automobile is fifteen percent lower at a given location on a current trip versus a previous trip, then the automobile's engine may be damaged. The comparison may take into account, for example, the vehicle's weight and throttle position, and external factors, such as wind speed and direction, to reduce the likelihood of a false positive detection of a deficiency. An indication may be made to the vehicle operator that there may be a defect in the vehicle that is causing the apparent deficiency. Such a system is described in commonly assigned U.S. Patent Application Serial No. __ (ZF Ref. No. 004925-US-NP, BHGL Ref. No. 13362-38). A fault indication may be transmitted via a network 600 to delivery server 300 that may monitor the progress of delivery.

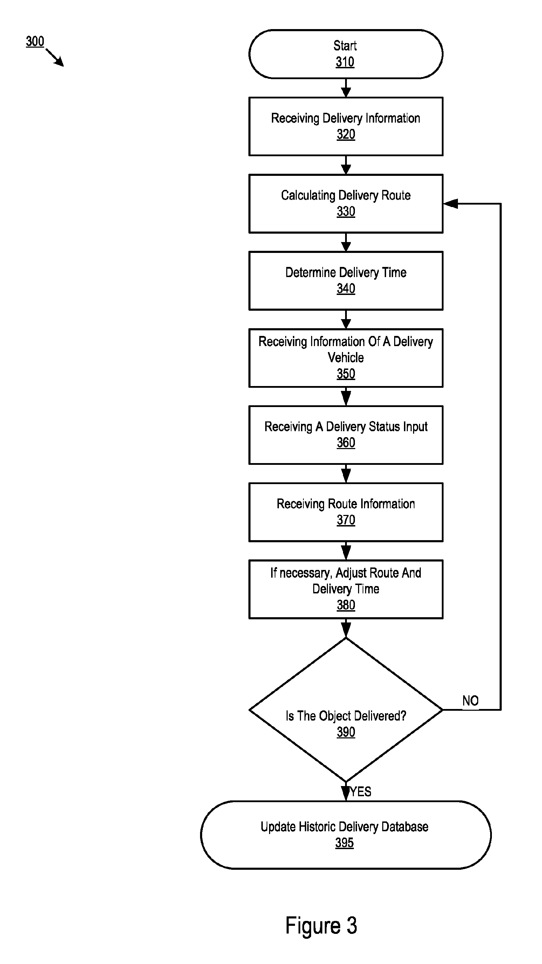

Figure 3 depicts a flow diagram of method 300 for forecasting a delivery time. In step 310, an operator or a system seeks to calculate an estimated delivery time of an object. In step 320, a system receives delivery information of an object including, for example, destination, carrier class, import/export information, contents, and physical characteristics (e.g., weight, dimensions). In step 330, the system calculates a delivery route based on, for example, delivery information, vehicle information, and route information. In step 340, the system determines a delivery time that may be based on the determined route. In step 350, the system receives information about the delivery vehicle carrying the object. For example, the current location or speed of the vehicle, or a defect on the vehicle may be transmitted to a delivery server via an on-board device installed in the vehicle. In step 360, the system receives the delivery status of the object. In step 370, the server receives information about the determine route and other potential routes. For example, the system may receive geographic, traffic, or weather information. The system may also receive or use data about routes including speed limits, road construction, road conditions, water routes, airfreight schedules, or shipping capacity. In step 380, the system determines whether the delivery time of the object needs adjustment. If the information received in the prior steps indicates that the current delivery time is inaccurate, then the system will update the delivery time taking into account the received information. The intended recipient of the object may receive a message about the updated delivery time.

In step 390, a system determines whether the object was delivered. The delivery status of an object may be stored in a server or database as described above. If the object has not been delivered, the system may return to step 330 to receive the most current vehicle, route, and delivery information. If the object has been delivered, then a system may perform step 395 and update a historic delivery database with the information tracked for the object about the route taken and the conditions encountered.

While various embodiments of the disclosure have been described, it will be apparent to those of ordinary skill in the art that many more embodiments and implementations are possible within the scope of the disclosure. Accordingly, the disclosure is not to be restricted except in light of the attached claims and their equivalents.

## Claims

1. A computer-implemented method of forecasting delivery time of an object comprising:
receiving delivery information of the object;
determining a delivery route for the object based on the delivery information;
receiving vehicle information about a vehicle carrying the object;
receiving route information of the delivery route;
adjusting the delivery route for the object based on the vehicle information and route information; and
estimating a delivery time of the object.

2. The method of claim 1, further comprising determining an estimated delivery time based on the delivery information.

3. The method of claim 2, further comprising adjusting the estimated delivery time based on the vehicle information and route information.

4. The method of claim 1, wherein the delivery information includes one of a delivery destination, a weight, a carrier class, a tracking number, and a content listing.

5. The method of claim 1, wherein the vehicle information includes one of speed, acceleration, location, and diagnostic data.

6. The method of claim 1, wherein the route information includes one of a weather forecast, a route construction report, and a traffic report.

7. The method of claim 6, wherein determining the delivery route comprises:
selecting a segment of the delivery route that is by road, water, or air;
selecting a distribution center along the route; and
selecting a vehicle to travel along the segment of the route.

8. The method of claim 7, wherein the vehicle is a first vehicle, and further comprising adjusting the delivery route by selecting the second vehicle to travel along the segment of the route instead of the first vehicle when the vehicle information indicates that the first vehicle is defective.

9. The method of claim 1 wherein the step of receiving vehicle information is receiving vehicle information from a device installed on the vehicle.

10. A computer-implemented method comprising:
receiving delivery information of an object;
receiving vehicle information;
receiving route information based on the delivery information;
determining a delivery plan for the object based on the delivery information, vehicle information, and route information; and
estimating a delivery time of the object.

11. The method of claim 10 wherein the step of determining a delivery plan comprises:
determining a delivery route;
selecting a vehicle to carry the object on a segment of the delivery route based on the vehicle information; and
determining an estimated delivery time.

12. The method of claim 10 further comprising:
receiving information about the vehicle while the vehicle is at a location along the segment;
receiving information about a condition at the location along the segment; and
updating the delivery plan based on the information about the vehicle and the information about the condition.

13. The method of claim 10 wherein the step of receiving information about the condition at the location comprises receiving information about one of weather conditions or traffic conditions at the location.

14. The method of claim 10 further comprising:
receiving, by an on-board device associated with the vehicle, the delivery plan;
displaying, by the on-board device, the delivery plan;
receiving, by the on-board device, a signal indicative of an acceptance of the delivery plan.

15. The method of claim 10 further comprising storing a delivery history of the object in a historic delivery database, wherein the step of determining a delivery plan comprises determining a delivery plan based on the historic delivery database.

16. The method of claim 10 wherein the step of storing the delivery history comprises storing an object location, an object carrier, and a time associated with the object location at predetermined intervals.

17. A system comprising:
a processor configured to:
receive delivery information of the object;
receive vehicle information;
receive route information based on the delivery information; and
determine a delivery plan for the object based on the delivery information, vehicle information, and route information; and
estimating a delivery time of the object; and
a transceiver in communication with the processor.

18. The system of claim 17 wherein the processor is further configured to:
determine a delivery route;
select a vehicle to carry the object on a segment of the delivery route based on the vehicle information; and
determine an estimated delivery time.

19. The system of claim 17 wherein the processor is further configured to:
receive information about the vehicle while the vehicle is at a location along the segment;
receive information about a condition at the location along the segment; and
update the delivery plan based on the information about the vehicle and the information about the condition.

20. The method of claim 17 wherein the information relates to weather conditions or traffic conditions at the location.
